(19) Europäisches Patentamt
European Patent Office
Office européen des brevets

(11) **EP 2 572 462 B1**

(12) **EUROPEAN PATENT SPECIFICATION**

(45) Date of publication and mention of the grant of the patent:
**28.08.2019 Bulletin 2019/35**

(21) Application number: **10751907.6**

(22) Date of filing: **31.08.2010**

(51) Int Cl.:
***H04J 3/06*** (2006.01) ***H04L 12/841*** (2013.01)

(86) International application number:
**PCT/EP2010/062713**

(87) International publication number:
**WO 2011/144263 (24.11.2011 Gazette 2011/47)**

(54) **OPTIMIZING TIMING PACKET TRANSPORT**

OPTIMIERUNG DES TRANSPORTS VON ZEITPAKETEN

OPTIMISATION DU TRANSPORT DE PAQUETS DE TEMPORISATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.05.2010 EP 10163032**

(43) Date of publication of application:
**27.03.2013 Bulletin 2013/13**

(73) Proprietor: **Telefonaktiebolaget LM Ericsson (publ)**
**164 83 Stockholm (SE)**

(72) Inventors:
- **RUFFINI, Stefano**
  **I-00179 Rome (IT)**
- **ERIKSSON, Per-Erik**
  **S-11637 Stockholm (SE)**

(74) Representative: **Zacco Sweden AB**
**Valhallavägen 117**
**Box 5581**
**114 85 Stockholm (SE)**

(56) References cited:
**EP-A1- 1 715 607 EP-A1- 1 801 687**
**EP-A1- 1 802 014 WO-A2-2008/024818**

- **TAKAHIDE MURAKAMI ET AL: "Improvement of synchronization accuracy in IEEE 1588 using a queuing estimation method" PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12 October 2009 (2009-10-12), pages 1-5, XP031570869 ISBN: 978-1-4244-4391-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 572 462 B1

Printed by Jouve, 75001 PARIS (FR)

## Description

### Field

The invention relates to networking in general and in particular to an improved packet timing transport mechanism.

### Background

There are a number of network applications requiring accurate frequency and/or time synchronization references in order to operate properly, for example mobile communication technologies such as Global System for Mobile Communications (GSM), Wideband Code Division Multiple Access (WCDMA) and Long Term Evolution (LTE).
Packet based networks typically use a timing packet-based method of distributing synchronization, where a time server sends timing packets out across the packet network, interspersed between data packets, to a receiving node. The timing packets carry timestamps of accurate clocks such as GPS, which at a receiving node are used for adjusting the local clock. The receiving nodes recover timing information using adaptive clock recovery methods in which the local timing is compared with the arrival and/or inter-arrival times of the timing packets (for example, as described in the standard ITU-T G.8261). The accuracy of the recovered timing information is therefore affected by variable delays in the packet network, and one of the key requirements of the timing information recovery algorithm is to filter out the packet delay variation (PDV).
WO 2008/024818 describes a controlled delay queuing logic to hold a packet in a first class for a queuing time of at least a controlled delay value.
EP 1715607 describes a networking forwarding device which time stamps timing packets that are received by the input ports with a predefined future time, and then outputs the timing packets from the output ports at the predefined time.
Many communications technologies require a high accuracy two-way timing protocol, for example Network Timing Protocol (NTP) or Precision Timing Protocol (PTP), in which the transfer delay from master to slave is calculated. One fundamental assumption with this approach is that the delay from master to slave and from slave to master shall be identical. This means that any asymmetry in the network can significantly impact the performance of the delivered time synchronization reference.
The use of transport media such as xDSL or GPON lines have been shown to introduce significant asymmetries in the transport of data such as PTP packets. In particular the statistics (e.g., maximum delay, minimum delay, mean delay, median delay, and mode) of the measured downstream delay data and upstream delay data in VDSL lines are significantly different, e.g., in the order of milliseconds or hundreds of microseconds. This implies that downstream delay and upstream delay are highly asymmetrical.
The accuracy of phase/time synchronization required by some mobile networks may be in the order of microseconds. This implies that the requirements (e.g., symmetrical delays and small jitters in the order of microseconds) for existing technologies such as IEEE 1588v2 to provide precise phase/time over DSL networks cannot be met by the current DSL systems. Whilst IEEE1588v2 boundary and transparent clocks can be used to recover the required accuracy, such solutions may introduce significant complexity and cost into the network. Additional issues include: layer violation in the case of transparent clocks; updating the content of the timing packet before it is sent out; security issues as timing packets are modified even if not terminated in the node (for instance IPSEC would not be applicable); the use of Boundary Clocks in multi-operator environment is problematic as it generally allows the handling of only a single operator domain; and in the case of PTP packets included in an IPSEC tunnel, the use of a Boundary Clock approach would require to terminate the IPSEC tunnel at the input of the VDSL (or GPON) system and regenerate the IPSEC tunnel at output adding delays and asymmetries.

### Summary

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. There is provided a method of optimizing timing packet transport in a network comprising a first network node connected to a second network node. The method comprises forwarding a timing packet received at the first network node to the second network node, and transmitting the timing packet from the second network node at a transmission time based on the arrival time of the timing packet at the first network node and a fixed transit time. This allows the packet delay to be fixed and predictable. In an embodiment, this approach is applied in both directions in order to provide a symmetric packet delay in order to distribute accurate time synchronization by means of methods such as PTP or IEEE1588.

Brief Description of Drawings

Embodiments will now be described, with reference to the following drawings and without intending to be limiting, which:

Figure 1 illustrates a packet network in which synchronisation information is transferred using the exchange of timing packets;

Figure 2 is a timing diagram illustrating a method of synchronising timing between two nodes using the PTP protocol;

Figure 3 illustrates an embodiment and shows first and second nodes of an access network which form part of the network of figure 1;

Figure 4 is a timing diagram for the embodiment of figure 3;

Figure 5 illustrates the scheduling of timing packets according to the embodiment of figures 3 and 4;

Figure 6 is a flow diagram illustrating a method according to an embodiment;

Figure 7 illustrates a method according to the another embodiment; and

Figure 8 illustrates a single network node according to a further embodiment.

Description of Embodiments

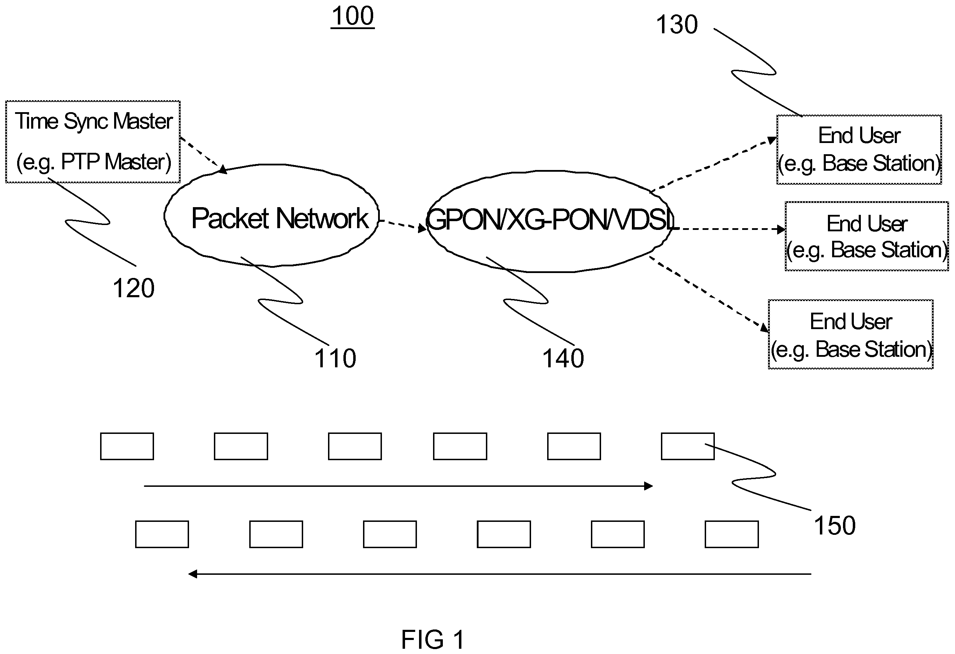

Figure 1 illustrates a packet network architecture in which a time server 120 sends timing packets 150 out across the network 100, interspersed between data packets, to a receiving node 130, which recovers the timing information from the timing packets, for use in adjusting the local clock, and the like. Each receiving node 130 runs an algorithm that recovers the timing information based on adaptive clock recovery methods - by comparing the local timing with the arrival and/or inter-arrival times of the packets (for example, as described in the standard ITU-T G.8261) and that recovers the time synchronization for instance as described in IEEE1588-2008. The frequency synchronization could be optionally deleiverd by alternative methods (e.g. via physical layer based methods, such as synchronous Ethernet).

In this embodiment, the network 100 includes a packet transport network 110 such as Ethernet over an optical transport network (OTN) and which includes a number of network nodes through which the timing and data packets pass on a hop by hop basis. The packet transport network 110 is coupled to an access network 140 which typically comprises two network nodes, though may additionally include further intermediate network nodes. The access network may comprise a passive optical network (xPON) or a digital subscriber line network (xDSL), for example GPON or VDSL. Because of the different architecture of the access network 140, the packet delay variation is typically more significant than for the packet transport network 110.

As already described, the accuracy of the recovered timing information is affected by variable delays of the timing packets 150 within the network 100. The variable delays occur largely due to variable packet processing times within network nodes, which in turn depends on higher layer processing of the packets and the number of packets processed.

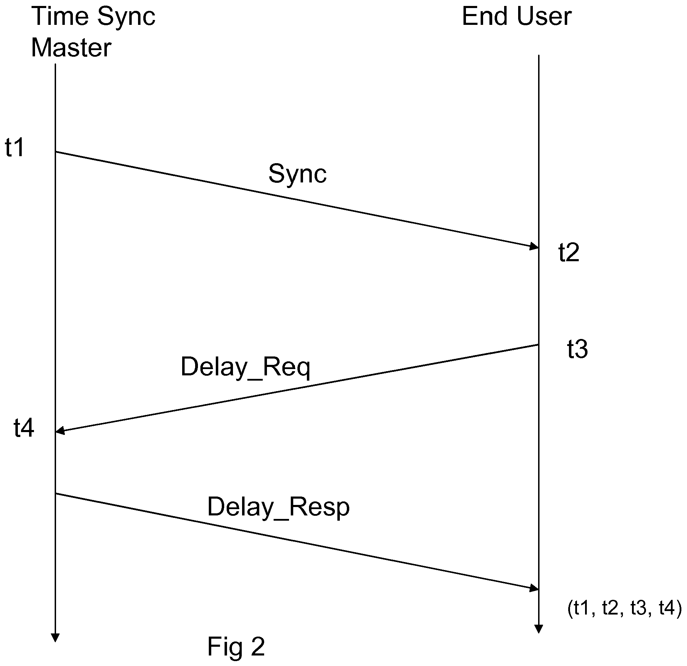

Figure 2 illustrates a two-way timing protocol according to PTP in which the transfer delay from master clock 120 to a slave clock 130 is calculated. One example of message exchange pattern is:

- The master sends a Sync message to the slave and notes the time, t1, at which it was sent.
- The slave receives the Sync message and notes the time of reception, t2.
- The master conveys to the slave the timestamp t1 by:
    - Embedding the timestamp t1 in the Sync message. This requires some sort of hardware processing for highest accuracy and precision, or
    - Embedding the timestamp t1 in a Follow Up message.
- The slave sends a Delay_Req message to the master and notes the time, t3, at which it was sent.
- The master receives the Delay_Req message and notes the time of reception, t4.
- The master conveys to the slave the timestamp t4 by embedding it in a Delay_Resp message.

At the conclusion of this exchange of messages, the slave possesses all four timestamps. These timestamps may be used to compute the offset of the slave's clock with respect to the master and the mean propagation time of messages between the two clocks.

The slave synchronizes to its master via the minimization of the <offsetFromMaster> value computed by the slave. The time error between a slave and master ordinary or boundary clock (<offsetFromMaster>) is defined as:

$$\langle \text{offsetFromMaster} \rangle = \langle \text{Time on the slave clock} \rangle - \langle \text{Time on the master clock} \rangle$$

where all times are measured at the same instant.

The <offsetFromMaster> value is computed by the slave as follows:

If a Follow_Up message will not be received, then

$$\langle \text{offsetFromMaster} \rangle = (t2 - t1) - \langle \text{meanPathDelay} \rangle - \text{correctionField of Sync message.}$$

If a Follow_Up message will be received, then

$$\langle \text{offsetFromMaster} \rangle = (t2 - t1) - \langle \text{meanPathDelay} \rangle - \text{correctionField of Sync message} - \text{correctionField of Follow_Up message}$$

where correction field of Sync message relates to the support in the transport network (i.e. Transparent Clocks adding information on the latency for the packet crossing the transport network element).

The nominal value of the <meanPathDelay> is computed as

$$\langle \text{meanPathDelay} \rangle = [(t_2 - t_1) + (t_4 - t_3)]/2 = [(t_2 - t_3) + (t_4 - t_1)]/2$$

It can be seen that the computation of offset and propagation time assumes that the master-to-slave and slave-to-master propagation times are equal. Any asymmetry in propagation time introduces an error in the computed value of the clock offset because the computed mean propagation time differs from the actual propagation times due to this asymmetry.

The embodiment recognizes that the absolute delay from the master to the slave and vice versa is not an issue as long as the total End-to-End delay is within the requirements of the specific application being used over that communications path (for instance in case of Radio Access Network connections, the time budget allocated to the access network is typically defined in the order of 20-30 ms). The embodiment uses an accurate, locally available, clock reference at network nodes to control the packet jitter and delay variation and aiming to make packet delay symmetric in both communication directions. In particular the embodiment operates the end nodes of the access network 140 in order to provide a predictable and symmetric transit delay across the access network for timing packets.

The clock references at the respective network nodes can be delivered via an external synchronization reference, such as Synchronous Ethernet (SyncE), or using a local clock having a sufficiently stable local oscillator.

The timing packet delay variation control can be achieved by properly delaying all timing packets such that each timing packet experiences a fixed transit time or duration K across the access network 140. This is preferably the same in both directions, but may be different in certain circumstances. In other words, the embodiment delays the output of timing packets from the access network 140 until a predetermined duration of time, K, after receipt of the timing packet into the access network 140. Preferably, the fixed transit time K is derived taking into account the overall time budget available for the particular application of the connection across the network. For example, in a mobile network, the transit time, K,in the access network may be set to 5 ms, and still satisfy then 20-30 ms time budget. However, the fixed latency K may be lower in actual implementations (e.g. 3 ms).

The embodiment is compatible for use with the IEEE1588 (or any other packet based methods, for instance based on NTP) timing standard implementations, and it is also compatible for use with nodes that do not support IEEE1588 Boundary Clock/Transparent Clock implementations. The proposed methods and apparatus are especially useful in the case of multi-operator environments, when in particular the implementation of the Boundary Clock may not be feasible.

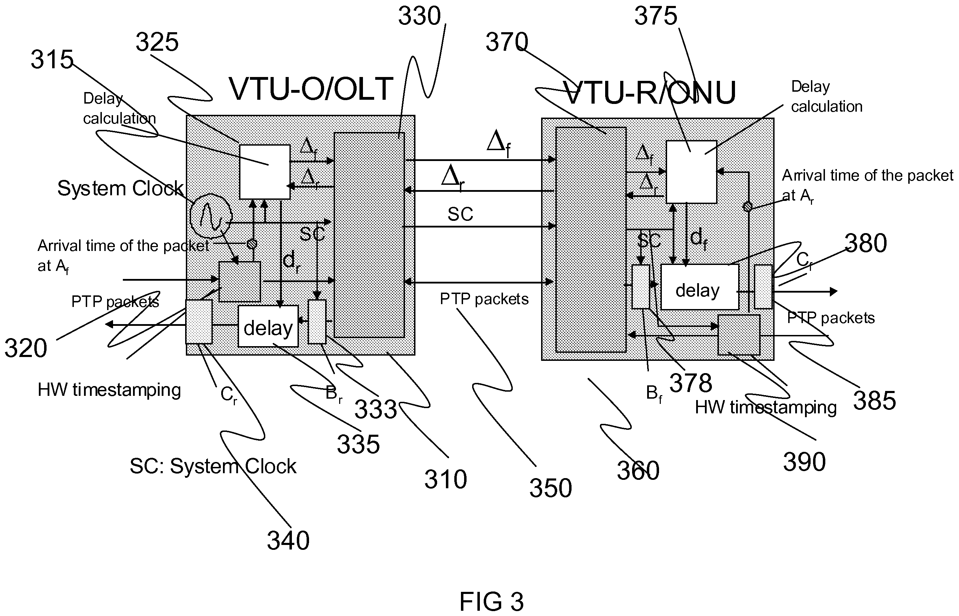

The embodiment is shown in more detail in figure 3, which illustrates end nodes of an access network 140 such as GPON or VDSL. In this example, a VDSL network comprises a VTU-O (or OLT) or first network node 310 connected to a VTU-R (or ONU) or second network node 360 by a connection medium 350 such as twisted copper wire for example.

PTP timing packets 150 are received by the first network node (VTU-O or OLT) 310, forwarded to the second network node (VTU-R or ONU) 360, and transmitted from the second network node the predetermined duration K after receiving the timing packet at the first network node.

The VTU-O or first network node 310 comprises a clock reference 315, an arrival time circuit 320, timing data circuitry 325, and a first interface 330. The VTU-O is connected to the second network node (VTU-R) 360 by the connection medium 350, which is used to forward timing and data packets received by the VTU-O, as well as overhead data associated with the access network 140 (310, 360, 350). As the figure illustrates handling of timing packets in both directions, an output queue 340, delay circuitry 335 and a second arrival time circuit 333 for timing packets received from the second network node are also illustrated.

The clock reference 315 may be an external source such as SyncE, or a local clock sufficiently stable. The arrival time circuit 320 receives timing packets 150 and is arranged to detect an arrival time Af of respective timing packets. This circuit is preferably implemented in hardware at the physical layer in order to ensure accurate arrival times Af. The timing packet is then passed to higher layer circuitry for processing, and initially to the timing data circuitry 325. The timing data circuitry 325 is typically implemented in software on a suitable processor or FPGA and is programmed to determine timing data associated with each timing packet 150. In this embodiment the timing data is calculated as a timing difference $\Delta f$ between the arrival time Af and a well defined edge of the clock reference 315 and will be described in more detail below. This enables the use of a corresponding well defined edge of a reconstructed clock reference at the other end node of the xPON or xDSL network. Alternative timing data may be used, for example the timestamp of the arrival time Af of the timing packet. The timing packet 150 and associated timing data are then forwarded by the interface 330 to the second network node (VTU-R) 360. The interface 330 is a software and/or hardware implemented functional block which interfaces with a corresponding second interface 370 in the VTU-R 360 in order to provide communication according to the VDSL protocols. The first and second interfaces also provide synchronization between the first and second network nodes 310 and 360 as will be described in more detail below.

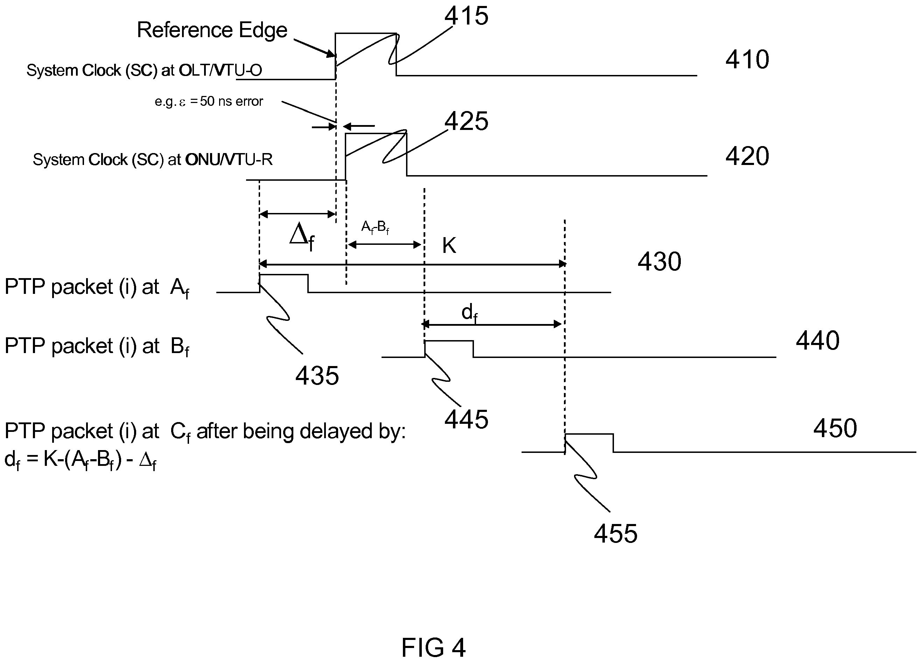

Referring also to figure 4, a clock pulse 410 on the clock reference 315 at the first network node 310 is shown. This clock reference is reconstructed at the second network node 360 as indicated by clock pulse 420. A timing packet 150 is detected at arrival time Af as indicated by reference 430. The timing difference $\Delta f$ between the arrival time Af and the next edge 415 of the first network node clock reference 410 is determined; and this provides the timing data for this timing packet. The transmission time Cf of the timing packet from the second network node 360 can then be determined at the second network node by reference to the reconstructed clock reference 420. A variable delay df is applied at the second network node 360 to ensure that the timing packet is transmitted at the predetermined duration or latency K after the arrival time Af at the first network node 310. In order to calculate the variable delay dr, the arrival time Bf of the timing packet at the second network node is determined, as indicated by reference 440. The variable delay is then calculated as $df = K - (Af-Bf) - \Delta f$, such that the transmission time Cf of the timing packet is $Cf = Af + K$ as indicated by reference 450.

In practice, there will be some additional delays including: a difference between the actual packet arrival time and the detected arrival time Af; and a difference between the clock reference 410 and the reconstructed clock reference 420. However these delays arise at the physical or hardware layer and therefore are so small that they can be ignored for typical communications applications - these physical layer delays are of the order of 50ns.

Referring again to figure 3, the second network node or VTU-R 360 comprises the second interface 370, a second node arrival time circuit 378, delay circuitry 380, and an output queue 385. The second node also comprises arrival time circuit 390 and timing data circuitry 375 for handling timing packets in the opposite direction. These elements (390, 375) and second interface 370 operate in the same manner as their counterparts in the first network node but for timing packets 150 received by the second network node 360 which are forwarded in the direction of the first network node 310.

The second network interface 370 forwards the timing packets received from the first network node 310 to an output buffer together with received data packets as will be described below. The transmission timing of these packets is controlled by a scheduler, which forwards timing and data packets to the output queue 385. The delay circuitry 380 may be implemented in the scheduler and is arranged to calculate the variable delay dr described above, which is used to output timing packets to the output queue 385 at the transmission time Cf. The delay circuitry 335 and output queue 340 of the first network node 310 operate in an analogous manner.

The second node arrival time circuit 378 is a hardware timestamp circuit which detects the arrival time Bf of the timing packets at the output buffer or delay circuitry 380 after higher layer processing.

As described, in typical applications timing packets 150 will flow in both directions across the access network 310, 350, and 360. Also typically, the latency in each direction for timing packets will be the same. However in some circumstances the latency K in the direction from the first to second network node (310 to 360) may be different from the latency K2 in the opposition direction from the second to the first network node (360 to 310).

For GPON, the predetermined latency will typically be in the order of 2-3ms. For VDSL, assuming Fast mode, a latency K in the range 3-5ms would be appropriate. In the case of VDSL interleaved mode, higher latencies might be considered, for example 5-10ms. The embodiment can additionally be configured to discard timing packets that exceed this latency K, for example due to excessive packet processing load in the higher layers of the first and second network nodes.

In order to ensure high accuracy, the clock reference (SC) 315, 410 and the reconstructed clock reference (SC') 420 at the second network node 360 should be closely synchronized. This can be achieved using a packet based method as described with respect to figure 2, but applied largely in the physical layer between the two end nodes 310 and 360 of the access network. Such a method is described for example in IEEE 1588v2 section 11 and may be implemented by the first and second interfaces 330 and 370. By periodically exchanging messages as described, the slave or reconstructed clock reference SC' 420 at the second network node 360 can be closely synchronized in frequency and phase with the master clock reference SC 410 available at the first network node. Because the timestamps for t1-t4 can be implemented at the hardware level, and the first and second node are typically directly connected to each other without intermediate nodes processing packets, the two clock references SC and SC' (410 and 420) can be tightly synchronized. This ensures that the calculation of the variable delay dr is also highly accurate, which in turn enhances the provision of reduced jitter and symmetrical delay of timing packets across the larger network 100.

Timing data can be associated with respective timing packets in a number of ways. For example, the timing difference $\Delta f$ may simply be appended to the timing packet by the first interface 330, before forwarding to the second network node. The second interface 370 then recovers this timing difference and forwards to the delay circuitry 380 together with the timing packet 150. Appropriate software may be used to implement this additional functionality on the first and second interfaces 330 and 370. In an alternative arrangement, the timing data may be inserted into a field of the timing packet, for example the payload may be updated by adding a TLV in a IEEE1588 packet as specified in that standard. In a further alternative, the timing packet may be tagged and associated timing data sent using the VSDL (or GPON) overhead.

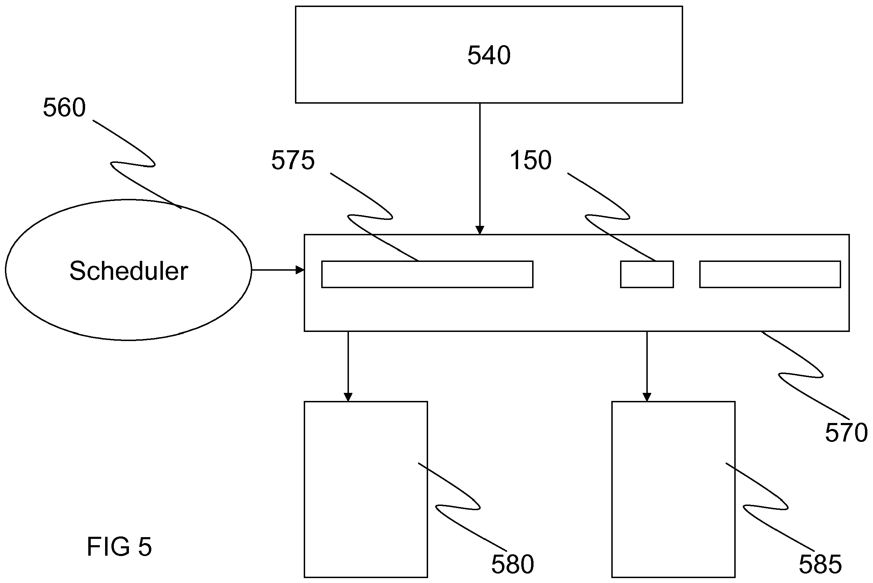

Figure 5 shows the delay circuitry 380 (or 335) in more detail. This may be implemented by a scheduler 560, an output buffer 570, and one or more output queues 385, 585. The output buffer 570 receives data packets 575 and timing packets 150 from higher layer processing blocks 540 within the second network node 360. The scheduler 560 will cause the data packets to be output to the output queues or ports 385, 585 according to a known scheduling algorithm. However the timing packets 150 will be output to the output queues depending on their associated timing data, and in particular at the transmission time Cf which is a predetermined duration or latency K after their detected arrival time Af at the first network node 310.

The scheduler 560 may also be arranged to delay output of a data packet 580 to a transmission queue or port 385 if the data packet is large enough that it would delay transmission of a subsequent timing packet beyond its allocated transmission time Cf.

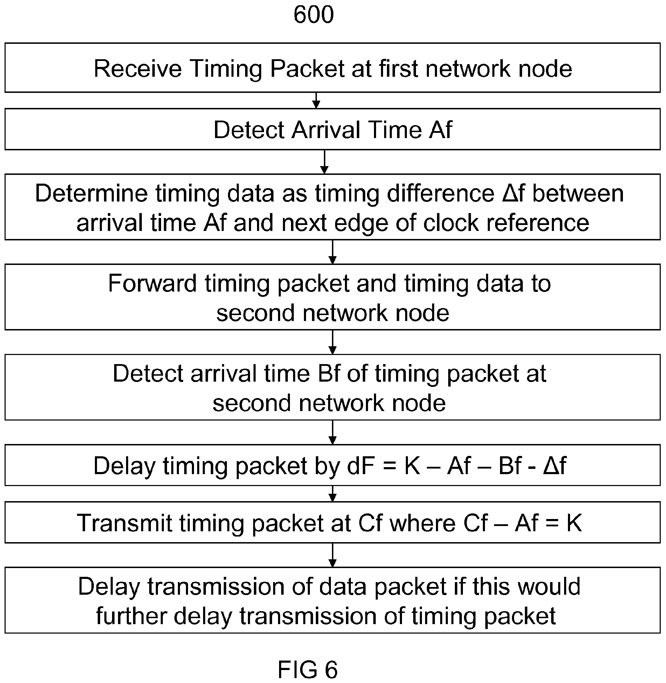

Figure 6 illustrates the method 600 of transferring timing packets across an access network according to the embodiment of figures 3 and 4. As already described, this will typically be implemented by a combination of hardware circuitry and software implemented calculation and processing steps.

Whilst timing packets are handled according to the method 600, data packets are typically handled in the normal manner and variable delay is not applied to such data packets. In the embodiment, timing packets are recognized at the first network node using packet inspection as is known.

In a VDSL implementation, the information that the packet is a PTP packet can be distributed to the remote end (VTU-R) in different ways using dual latency ports. In a first implementation, the timing and data packets are carried on the same latency path but the timing packets are flagged by polling on a second latency port. The flagged timing packets are then handled differently as described above. In a second implementation, the timing and data packets are assigned to different latency paths.

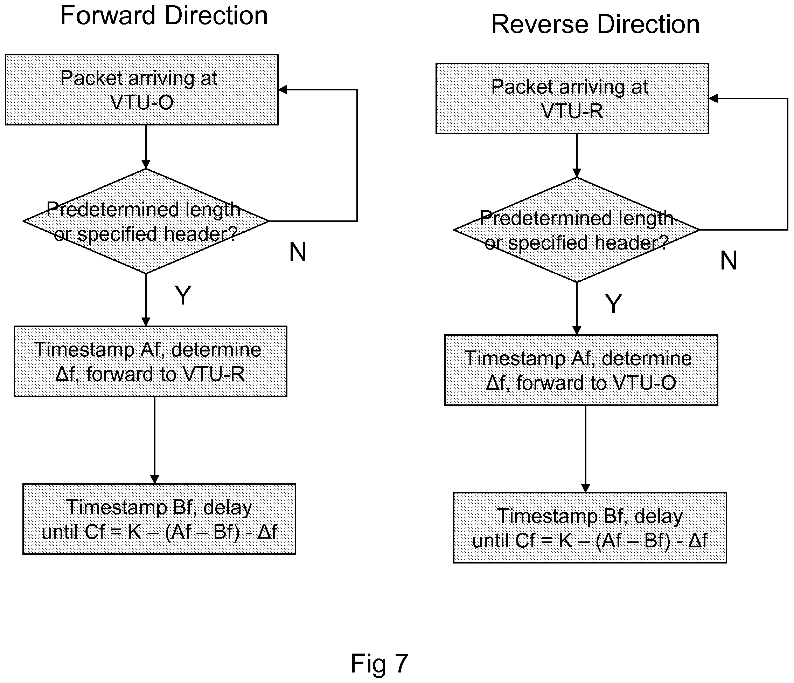

In an alternative embodiment illustrated in figure 7, timing packets are identified and distinguished from data packets by packet length or identification included in a specified packet header. In the first implementation, IEEE 1588 timing packets for example have a specific length. Therefore timing packets can be identified as having a predetermined length range, for example 64 bytes or less. Such timing packets are then subject to the latency procedure such that they are transmitted from the second network node a predetermined duration K after the timing packets were received at the first network node. By contrast, data packets above this predetermined length range are handled in the usual way and do not have additional variable delays applied.

Whilst it is possible that a data packet may fall within the predetermined packet length range (eg 64 bytes or less), the additional delay applied should not have any consequence so long as the total latency is within acceptable limits (eg a few ms).

In a second implementation, identification of a specified packet header may be used. For example a specified header byte may be used to indicate the packet as a timing packet. Where an IPSEC tunnel is employed, a byte of the authentication header (AH) may be used in case the AH protocol is used or the SPI might be used in case of ESP.

The method of figure 7 shows both forward and reverse directions. An advantage of this embodiment is that the access network 140 can apply the timing packet latency feature even when the timing packets are provided through an IPSEC tunnel. Such a tunnel would make timing packets unreadable by the first (or second) network node 310 (360).

However the use of IPSEC overhead or of the packet length as the means of identifying timing packets overcomes this difficulty and enables the application of predetermined latency to timing packets even in this situation. Any suitable packet length range may be used to identify timing packets. For example in the case of IPSEC tunnels, packets will additionally include an IPSEC overhead and this should be included in the predetermined packet length range.

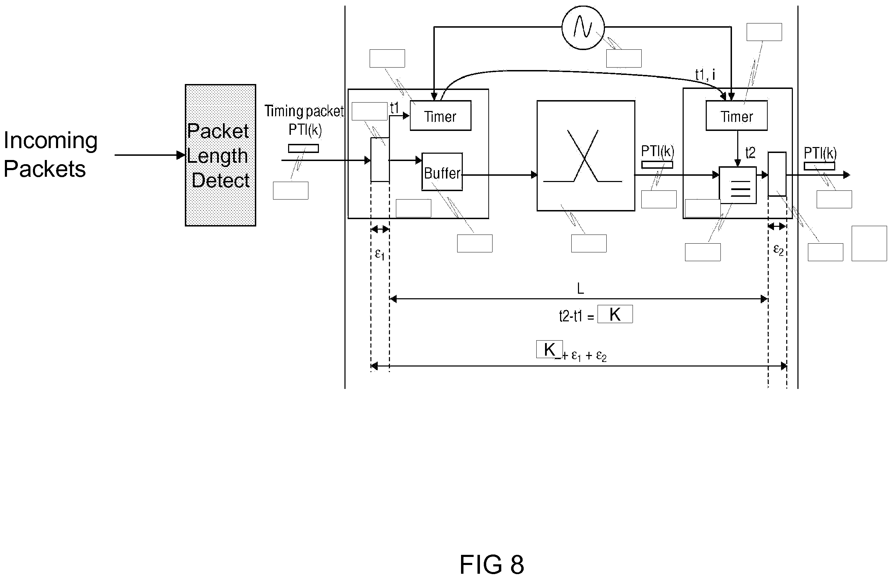

In a further embodiment illustrated in figure 8, the use of the packet length detect block is employed with a single network node timing packet latency implementation. As with the previous embodiment, data packets are handled normally, but identified timing packets (eg 64 bytes or less) are handled separately within the node. As with the access node embodiments described above, variable packet processing delays are incurred between receiving and transmitting the timing packet from the network node. Here a predetermined latency or transit time L is applied to all timing packets passing through the node. By applying this method to timing packets in both directions and in all nodes along through a network, the timing packet total path delay is predictable and symmetric. As with the access network embodiment, this embodiment is able to handle IPSEC tunneling.

Incoming timing packets PTI(k) are identified according to their packet length, using a packet length detection block implemented on the input line card. A timer circuit detects the arrival time Af of the timing packet which then enters an input buffer for higher layer processing. For example the packet may be switched or routed as indicated. A sufficiently stable local clock reference is used to detect the arrival time Af, and to time the transmission time Cf. The timing packet is then received at an output buffer on the other side of the switch at time Bf. The arrival time Bf at the output bugger is also detected using the clock reference. The timing packet is then sent to the output port for transmission at time Cf = Af + K where K is a predetermined duration or latency.

Whilst the embodiments have been described with respect to access networks such as xPON and xDSL, alternative embodiments may involve different networks such as a packet carrier network in which there are a number of intermediate nodes between the first and second network nodes. This embodiment can be implemented utilising synchronised time at the first and second network nodes, for example where both nodes have access to GPS. In this embodiment, the timing packet is delayed by a variable delay so that its transmission time (Cf) is the predetermined duration K after its arrival time (Af) at the first network node.

Whilst the embodiments have been described as applying the fixed latency K only to timing packets, in certain embodiments, it may be acceptable to apply this latency to all packets including data packets in order to simplify implementation at the first and/or second network nodes.

Whilst the embodiments have been described with respect to PTP and IEEE1588, they could also be applied to any similar timing protocol such as NTP for example.

**Claims**

1. A method of optimizing timing packet transport in a network (100) comprising a first network node (310) connected to a second network node (360), the method comprising:
forwarding a timing packet (150) received at the first network node (310) to the second network node (360), and transmitting the timing packet from the second network node (360) at a transmission time after the timing packet is received from the first network node (310), the method further comprising:

    detecting an arrival time for the timing packet (150) received at the first network node (310);
    forwarding the received timing packet and timing data indicating the arrival time and associated with the timing packet to the second network node (360); and
    transmitting the timing packet from the second network node (360) at the transmission time, wherein the transmission time is equal to a sum of a fixed transit time and the arrival time of the timing packet at the first network node and the fixed transit time is derived taking into account an overall time budget available for a particular application of the connection across the network.

2. The method of claim 1, wherein the timing data associated with a timing packet (150) is forwarded in one of the following ways: appended to the timing packet; inserted into a field of the timing packet; sent separately to the timing packet and the timing packet being tagged in order to identify the associated timing data at the second network node (360).

3. The method of any preceding claim, wherein the timing packet (150) is distinguished from other packets received by the first network node by its length.

4. The method of any preceding claim, wherein the network (100) is a passive optical network or a digital subscriber line network forming part of a larger network with which timing packets are received and transmitted.

**5.** The method of any preceding claim,
detecting a size of a data packet scheduled to be transmitted on a same output port as the timing packet (150); and delaying the transmission of the data packet if the size of the data packet indicates that transmitting the data packet would delay the transmission of the timing packet (150) at the transmission time.

**6.** The method of any preceding claim, further comprising forwarding a timing packet (150) received at the second network node (360) to the first network node, and transmitting the timing packet from the first network node based on a second fixed transit time and an arrival time of the timing packet received at the second network node, wherein the first and second fixed transit times are equal.

**7.** The method of any preceding claim, further comprising:
identifying received packets, as timing packets based on a predetermined packet length range or a specified packet header.

**8.** The method of claim 7, further comprising:

receiving and identifying the timing packets at a first network node;
forwarding the identified packets received from the first network node to a second network node; and
transmitting the identified packets from the second network node based on the fixed transit time and an arrival time of the identified packets received at the first network node.

**9.** A network (100) comprising:

a first network node (130) having circuitry arranged to detect an arrival time of a received timing packet (150), and a first interface (330) arranged to forward the timing packet and associated timing data to a second network node (360);
the second network node (360) having a second interface (370) arranged to receive the timing packet, transmission circuitry arranged to transmit the timing packet, and delay (380) circuitry arranged to determine a transmission time of the timing packet and
the first network node (310) having timing data circuitry (325) arranged to determine the timing data indicating the arrival time and associate with the timing packet, the first interface (330) further arranged to forward the timing data to the second network node, and wherein the delay circuitry is arranged to determine the transmission time for the timing packet; wherein the transmission time is s equal to a sum of a fixed transit time and the arrival time of the timing packet at the first network node and the fixed transit time is derived taking into account an overall time budget available for a particular application of the connection across the network.

## Patentansprüche

**1.** Verfahren zum Optimieren des Transports von Zeitpaketen in einem Netzwerk (100), umfassend einen ersten Netzknoten (310), der mit einem zweiten Netzknoten (360) verbunden ist, wobei das Verfahren umfasst: Weiterleiten eines an dem ersten Netzknoten (310) empfangenen Zeitpakets (150) an den zweiten Netzknoten (360) und Übertragen des Zeitpakets von dem zweiten Netzknoten (360) zu einem Übertragungszeitpunkt, nachdem das Zeitpaket von dem ersten Netzknoten (310) empfangen wurde, wobei das Verfahren ferner Folgendes umfasst:

Erkennen einer Ankunftszeit für das Zeitpaket (150), das an dem ersten Netznoten (310) empfangen wird;
Weiterleiten des empfangenen Zeitpakets und der Zeitdaten, die die Ankunftszeit angeben und dem Zeitpaket zugeordnet sind, an den zweiten Netzknoten (360); und
Übertragen des Zeitpakets vom zweiten Netzknoten (360) zur Übertragungszeit, wobei die Übertragungszeit gleich einer Summe aus einer festen Laufzeit und der Ankunftszeit des Zeitpakets am ersten Netzknoten ist und die feste Laufzeit unter Berücksichtigung eines für eine bestimmte Anwendung der Verbindung über das Netzwerk verfügbaren Gesamtzeitbudgets abgeleitet wird.

**2.** Verfahren nach Anspruch 1, wobei die einem Zeitpaket (150) zugeordneten Zeitdaten auf eine der folgenden Arten weitergeleitet werden: angehängt an das Zeitpaket; eingefügt in ein Feld des Zeitpakets; separat an das Zeitpaket gesendet und wobei das Zeitpaket gekennzeichnet ist, um die zugeordneten Zeitdaten an dem zweiten Netzknoten (360) zu identifizieren.

3. Verfahren nach einem der vorstehenden Ansprüche, wobei das Zeitpaket (150) durch seine Länge von anderen Paketen unterschieden wird, die vom ersten Netzknoten empfangen werden.

4. Verfahren nach einem der vorstehenden Ansprüche, wobei das Netzwerk (100) ein passives optisches Netzwerk oder ein digitales Teilnehmerleitungsnetzwerk ist, das Teil eines größeren Netzwerks ist, mit dem Zeitpakete empfangen und übertragen werden.

5. Verfahren nach einem der vorstehenden Ansprüche, wobei eine Größe eines Datenpakets erkannt wird, das auf einem gleichen Ausgangsport wie das Zeitpaket (150) übertragen werden soll; und Verzögern der Übertragung des Datenpakets, wenn die Größe des Datenpakets anzeigt, dass die Übertragung des Datenpakets die Übertragung des Zeitpakets (150) zum Übertragungszeitpunkt verzögern würde.

6. Verfahren nach einem der vorstehenden Ansprüche, ferner umfassend das Weiterleiten eines an dem zweiten Netzknoten (360) empfangenen Zeitpakets (150) an den ersten Netzknoten und das Übertragen des Zeitpakets von dem ersten Netzknoten basierend auf einer zweiten festen Laufzeit und einer Ankunftszeit des an dem zweiten Netzknoten empfangenen Zeitpakets, wobei die ersten und zweiten festen Laufzeiten gleich sind.

7. Verfahren nach einem der vorstehenden Ansprüche, ferner umfassend:
Identifizieren von empfangenen Paketen als Zeitpakete basierend auf einem vorbestimmten Paketlängenbereich oder einem angegebenen Paketkopf.

8. Verfahren nach Anspruch 7, ferner umfassend:

   Empfangen und Identifizieren der Zeitpakete an einem ersten Netzknoten;
   Weiterleiten der identifizierten Pakete, die vom ersten Netzknoten empfangen wurden, an einen zweiten Netzknoten; und
   Übertragen der identifizierten Pakete von dem zweiten Netzknoten basierend auf der festen Laufzeit und einer Ankunftszeit der identifizierten Pakete, die an dem ersten Netzknoten empfangen wurden.

9. Netzwerk (100), umfassend:

   einen ersten Netzknoten (130), der eine Schaltung aufweist, die zum Erkennen einer Ankunftszeit eines empfangenen Zeitpakets (150) angeordnet ist, und eine erste Schnittstelle (330), die zum Weiterleiten des Zeitpakets und der zugeordneten Zeitdaten an einen zweiten Netzknoten (360) angeordnet ist;
   wobei der zweite Netzknoten (360) eine zweite Schnittstelle (370) aufweist, die zum Empfangen des Zeitpakets angeordnet ist, eine Übertragungsschaltung, die zum Übertragen des Zeitpakets angeordnet ist, und eine Verzögerungsschaltung (380), die zum Bestimmen einer Übertragungszeit des Zeitpakets angeordnet ist, und wobei der erste Netzknoten (310) eine Zeitdatenschaltung (325) aufweist, die zum Bestimmen der Zeitdaten angeordnet ist, die die Ankunftszeit angeben und mit dem Zeitpaket zugeordnet sind, wobei die erste Schnittstelle (330) ferner zum Weiterleiten der Zeitdaten an den zweiten Netzknoten angeordnet ist, und wobei die Verzögerungsschaltung zum Bestimmen der Übertragungszeit für das Zeitpaket angeordnet ist; wobei die Übertragungszeit gleich einer Summe aus einer festen Laufzeit und der Ankunftszeit des Zeitpakets am ersten Netzknoten ist und die feste Laufzeit unter Berücksichtigung eines für eine bestimmte Anwendung der Verbindung über das Netzwerk verfügbaren Gesamtzeitbudgets abgeleitet wird.

**Revendications**

1. Procédé d'optimisation de transport de paquet de temporisation dans un réseau (100) comprenant un premier noeud de réseau (310) connecté à un deuxième noeud de réseau (360), le procédé comprenant : l'acheminement d'un paquet de temporisation (150) reçu au niveau du premier noeud de réseau (310) au deuxième noeud de réseau (360), et la transmission du paquet de temporisation depuis le deuxième noeud de réseau (360) à un moment de transmission après que le paquet de temporisation est reçu du premier noeud de réseau (310), le procédé comprenant en outre :

   la détection d'un moment d'arrivée pour le paquet de temporisation (150) reçu au niveau du premier noeud de réseau (310) ;
   l'acheminement du paquet de temporisation reçu et de données de temporisation indiquant le moment d'arrivée et associées au paquet de temporisation au deuxième noeud de réseau (360) ; et
la transmission du paquet de temporisation depuis le deuxième noeud de réseau (360) au moment de transmission, dans lequel le moment de transmission est égal à une somme d'un temps de transit fixe et du moment d'arrivée du paquet de temporisation au niveau du premier noeud de réseau et le temps de transit fixe est dérivé en tenant compte du budget-temps global disponible pour une application particulière de la connexion à travers le réseau.

**2.** Procédé selon la revendication 1, dans lequel les données de temporisation associées à un paquet de temporisation (150) sont acheminées d'une des manières suivantes : annexées au paquet de temporisation ; insérées dans un champ du paquet de temporisation ; envoyées séparément au paquet de temporisation et le paquet de temporisation étant marqué afin d'identifier les données de temporisation associées au niveau du deuxième noeud de réseau (360).

**3.** Procédé selon l'une quelconque des revendications précédentes, dans lequel le paquet de temporisation (150) se distingue des autres paquets reçus par le premier noeud de réseau par sa longueur.

**4.** Procédé selon l'une quelconque des revendications précédentes, dans lequel le réseau (100) est un réseau optique passif ou un réseau de ligne d'abonné numérique faisant partie d'un plus grand réseau avec lequel des paquets de temporisation sont reçus et transmis.

**5.** Procédé selon une quelconque revendication précédente, détectant une taille d'un paquet de données planifié pour être transmis sur un même port de sortie que le paquet de temporisation (150) ; et
retardant la transmission du paquet de données si la taille du paquet de données indique que la transmission du paquet de données retarderait la transmission du paquet de temporisation (150) au moment de transmission.

**6.** Procédé selon une quelconque revendication précédente, comprenant en outre l'acheminement d'un paquet de temporisation (150) reçu au niveau du deuxième noeud de réseau (360) au premier noeud de réseau, et la transmission du paquet de temporisation depuis le premier noeud de réseau sur la base d'un deuxième temps de transit fixe et d'un moment d'arrivée du paquet de temporisation reçu au niveau du deuxième noeud de réseau, dans lequel les premier et deuxième temps de transit fixes sont égaux.

**7.** Procédé selon une quelconque revendication précédente, comprenant en outre :
l'identification des paquets reçus, en tant que paquets de temporisation sur la base d'une plage prédéterminée de longueur de paquet ou d'un en-tête de paquet spécifié.

**8.** Procédé selon la revendication 7, comprenant en outre :

la réception et l'identification des paquets de temporisation au niveau d'un premier noeud de réseau ;
l'acheminement des paquets identifiés reçus du premier noeud de réseau à un deuxième noeud de réseau ; et
la transmission des paquets identifiés depuis le deuxième noeud de réseau sur la base du temps de transit fixe et d'un moment d'arrivée des paquets identifiés reçus au niveau du premier noeud de réseau.

**9.** Réseau (100) comprenant :

un premier noeud de réseau (130) ayant un circuit agencé pour détecter un moment d'arrivée d'un paquet de temporisation reçu (150), et une première interface (330) agencée pour acheminer le paquet de temporisation et les données de temporisation associées à un deuxième noeud de réseau (360) ;
le deuxième noeud de réseau (360) ayant une deuxième interface (370) agencée pour recevoir le paquet de temporisation, un circuit de transmission agencé pour transmettre le paquet de temporisation, et un circuit de retard (380) agencé pour déterminer un moment de transmission du paquet de temporisation et
le premier noeud de réseau (310) ayant un circuit de données de temporisation (325) agencé pour déterminer les données de temporisation indiquant le moment d'arrivée et les associer au paquet de temporisation, la première interface (330) agencée en outre pour acheminer les données de temporisation au deuxième noeud de réseau, et dans lequel le circuit de retard est agencé pour déterminer le moment de transmission pour le paquet de temporisation ; dans lequel le moment de transmission est égal à une somme d'un temps de transit fixe et du moment d'arrivée du paquet de temporisation au niveau du premier noeud de réseau et le temps de transit fixe est dérivé en tenant compte d'un budget-temps global disponible pour une application particulière de la connexion à travers le réseau.

100
130
Time Sync Master
(e.g. PTP Master)
Packet Network
GPON/XG-PON/VDSL
End User
(e.g. Base Station)
End User
(e.g. Base Station)
End User
(e.g. Base Station)
120
110
140
150

FIG 1

Time Sync Master
End User
t1
t2
t3
t4
Sync
Delay_Req
Delay_Resp
(t1, t2, t3, t4)

Fig 2

VTU-O/OLT
VTU-R/ONU
Delay calculation
System Clock
Arrival time of the packet at $A_f$
PTP packets
HW timestamping
$C_r$
$B_r$
SC
$d_r$
delay
$\Delta_f$
$\Delta_r$
SC: System Clock
Delay calculation
Arrival time of the packet at $A_r$
$d_f$
$C_f$
$B_f$
PTP packets
HW timestamping
315
325
330
370
375
380
320
333
335
310
350
360
378
385
390
340

FIG 3

Reference Edge
System Clock (SC) at OLT/VTU-O
e.g. ε = 50 ns error
System Clock (SC) at ONU/VTU-R
PTP packet (i) at $A_f$
PTP packet (i) at $B_f$
PTP packet (i) at $C_f$ after being delayed by:
$d_f = K-(A_f-B_f) - \Delta_f$
410
415
420
425
430
435
440
445
450
455
$\Delta_f$
$A_f$-$B_f$
K
$d_f$

FIG 4

570
585
540
150
580
575
560
Scheduler

FIG 5

600
Receive Timing Packet at first network node
Detect Arrival Time Af
Determine timing data as timing difference Δf between arrival time Af and next edge of clock reference
Forward timing packet and timing data to second network node
Detect arrival time Bf of timing packet at second network node
Delay timing packet by dF = K – Af – Bf - Δf
Transmit timing packet at Cf where Cf – Af = K
Delay transmission of data packet if this would further delay transmission of timing packet

FIG 6

Forward Direction
Packet arriving at VTU-O
Predetermined length or specified header?
N
Y
Timestamp Af, determine Δf, forward to VTU-R
Timestamp Bf, delay until Cf = K – (Af – Bf) - Δf
Reverse Direction
Packet arriving at VTU-R
Predetermined length or specified header?
N
Y
Timestamp Af, determine Δf, forward to VTU-O
Timestamp Bf, delay until Cf = K – (Af – Bf) - Δf

Fig 7

Incoming Packets
Packet Length Detect
Timing packet
PTI(k)
t1
Timer
Buffer
ε1
t1, i
PTI(k)
Timer
t2
ε2
PTI(k)
L
t2-t1 = K
K + ε1 + ε2

FIG 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008024818 A
- EP 1715607 A